# DEMANDE DE BREVET EUROPEEN

(11) **EP 3 764 372 A1**
(43) Date de publication de la demande: **13.01.2021**
(21) Numéro de dépôt: 20184791.0
(22) Date de dépôt: 08.07.2020
(51) Int. Cl.: H01B 7/295, H01B 3/10, H01B 3/12

(54) **CÂBLE COMPRENANT UNE COUCHE RÉSISTANTE AU FEU**

(30) Priorité: 12.07.2019 FR 1907865
(71) Demandeur: Nexans, 92400 Courbevoie (FR)
(72) Inventeur: BRISMALEIN, Christophe, 62800 LIEVIN (FR)
(74) Mandataire: Ipsilon

(57) **Abrégé**

La présente invention se rapporte à un câble comprenant au moins un élément conducteur allongé et au moins une couche isolante résistante au feu, ainsi qu'au procédé de préparation d'un tel câble.

## Description

La présente invention se rapport à un câble d'énergie comprenant au moins un élément conducteur allongé et au moins une couche isolante résistante au feu, ainsi qu'au procédé de préparation d'un tel câble.

Elle s'applique typiquement mais non exclusivement aux câbles de sécurité résistants au feu susceptibles de fonctionner pendant un laps de temps donné dans des conditions d'incendie, sans être pour autant propagateur d'incendie ni générateur de fumées importantes. Ces câbles de sécurité sont en particulier des câbles à basse ou moyenne tension (notamment de 6 à 45-60 kV) du type câbles de transport d'énergie ou câbles de transmission, tels que par exemple des câbles de contrôle ou de signalisation.

Un câble d'énergie est un câble destiné au transport de l'énergie électrique. Il comprend classiquement un ou plusieurs éléments conducteurs isolés, ou en d'autres termes un ou plusieurs conducteur(s) électrique(s) allongé(s) entouré(s) par au moins une couche isolante. La couche isolante peut être typiquement une couche polymère électriquement isolante en contact physique avec le ou les conducteur(s) électrique(s). Ledit ou lesdits éléments conducteurs isolés sont généralement entourés par une gaine extérieure de protection destinée à protéger mécaniquement le ou les éléments conducteurs isolés.

Les matériaux utilisables pour former la couche isolante sont généralement des matériaux composites à base de polymères, en particulier de polymères siliconés, et de divers adjuvants notamment des charges de renfort telles que de la silice.

Si ces matériaux présentent en principe de bonnes propriétés mécaniques et diélectriques, ils ne sont cependant pas résistants au feu et fondent rapidement sous l'effet des températures élevées générées par lors des incendies.

Or, selon la norme de résistance au feu IEC 60331, les câbles dits « résistants au feu » sont des câbles configurés pour pouvoir continuer de fonctionner avec des performances acceptables même si, en cas d'incendie, ils sont directement exposés aux flammes pendant une certaine durée, à des températures de 750°C à 900°C ou même à des températures supérieures.

Des câbles comportant une couche isolante résistante au feu ont déjà été proposés, notamment dans la demande internationale WO2017/199060 qui décrit un câble résistant au feu comprenant un élément conducteur allongé entouré par une couche d'une composition céramifiable comprenant un mélange spécifique de polymères thermoplastiques comprenant (a) un copolymère d'éthylène et d'une alpha-oléfine ayant une densité de 0,860 à 0,910 g/cm³, un indice de fluidité à chaud (IFC) ne dépassant pas 3 g/10 minutes et un point de fusion d'au plus 105°C, (b) un homopolymère d'éthylène ou un copolymère d'éthylène et d'une alpha-oléfine ayant une densité de 0,900 à 0,985 g/cm³, un indice de fluidité à chaud (IFC) ne dépassant pas 5 g/10 minutes et un point de fusion d'au plus 110°C, et (c) un polyéthylène substitué par un monomère comportant un insaturation éthylénique ; au moins 25 % en poids de silice ; un agent de fluxage choisi parmi les oxydes métaux alcalins et leurs précurseurs ; un hydroxyde inorganique tel que l'hydroxyde de magnésium, l'hydroxyde d'aluminium et leurs mélanges ; et au moins 5 % en poids d'un agent stabilisant à base de silicate de magnésium hydraté. Cette composition est généralement mise en œuvre par extrusion sous la forme d'une couche ayant une épaisseur de plusieurs millimètres. Cette couche céramifiable peut constituer la couche externe du câble (gaine externe) ou bien le matériau de remplissage (ou « *bedding* » en anglais) entre les éléments conducteurs isolés et la gaine externe. Lorsque cette couche céramifiable est exposée à des températures élevées telles que celles occasionnées par les incendies, elle réagit pour former une couche céramique résistante au feu.

Les câbles comportant une telle couche présentent une bonne résistance au feu mais ont cependant un diamètre important compte tenu de l'épaisseur de la couche céramifiable.

Le but de la présente invention est de fournir un câble présentant une bonne résistance au feu tout en ayant un diamètre inférieur aux câbles de l'art antérieur, grâce notamment à la présence d'une couche résistance au feu présentant une faible épaisseur.

La présente invention a pour premier objet un câble comprenant au moins un élément électriquement conducteur allongé et au moins une couche résistante au feu entourant ledit élément électriquement conducteur allongé, ledit câble étant caractérisé en ce que ladite couche résistante au feu est en contact physique direct avec ledit élément électriquement conducteur allongé, et en ce que ladite couche résistante au feu est obtenue par traitement thermique d'une composition inorganique liquide. De préférence, la composition inorganique liquide peut être solidifiée grâce au traitement thermique : on parle alors d'une couche résistante au feu obtenue par solidification de la composition inorganique liquide.

Au sens de la présente invention, l'expression « en contact physique direct » signifie qu'aucune couche, de quelque nature que ce soit, ne vient s'intercaler entre ledit élément électriquement conducteur allongé et ladite couche résistante au feu. En d'autres termes, le câble ne comprend pas de couche(s) intermédiaire(s), notamment de couche(s) comprenant au moins un polymère, positionnée(s) entre ledit élément électriquement conducteur allongé et ladite couche résistante au feu.

Une couche dite de « passivation » formée par oxydation, par exemple à l'air ou par traitement de surface de l'élément électriquement conducteur allongé, n'est pas considérée comme une couche s'intercalant ou positionnée entre ledit élément électriquement conducteur allongé et ladite couche résistante au feu. En d'autres termes, l'élément électriquement conducteur allongé peut comprendre une couche de passivation. De ce fait, la couche résistante au feu peut être en contact physique direct avec la couche de passivation de l'élément électriquement conducteur allongé.

Le traitement thermique de la composition inorganique liquide, ou plus particulièrement la solidification de la composition inorganique liquide, peut être réalisée à une température d'au plus 300°C environ, de préférence à une température choisie dans une gamme allant de 90°C à 300°C environ, et encore plus préférentiellement à une température choisie dans une gamme allant de 200°C à 300°C environ.

La durée du traitement thermique varie en fonction de la température à laquelle ledit traitement est effectué. Cependant, lorsque le traitement thermique est effectué à une température comprise entre 95°C et 300°C environ, la durée du traitement thermique varie typiquement de 1 seconde (s) à 2 heures (h), et préférentiellement de 15 s à 5 minutes (min), notamment pour une application en continue.

A titre d'exemple, le traitement thermique peut comprendre un ou plusieurs cycles choisis parmi 95 °C pendant 2 h, 25 °C pendant 30 min, 95 °C pendant 10 min, 150 °C pendant 1 min, 200 °C pendant 15 s, 250 °C pendant 5 s, 250 °C pendant 30 s, et une de leur combinaison.

La composition inorganique liquide est notamment une composition résistante au feu. Elle est de préférence une composition comprenant au moins un oxyde d'un métal de transition, au moins un aluminosilicate, et au moins un solvant, le solvant permettant notamment d'obtenir une composition liquide. Le solvant peut être avantageusement évaporer lors du traitement thermique de la composition inorganique liquide.

. Elle peut en outre comprendre au moins un autre silicate différent dudit aluminosilicate, tel que par exemple un silicate de sodium, un silicate de calcium ou un silicate de potassium.

Selon une forme de réalisation préférée de l'invention, la composition inorganique liquide comprend au moins 10 % environ en poids d'au moins un oxyde d'un métal de transition, et encore plus préférentiellement de 15 % à 60 % environ en poids d'au moins un oxyde d'un métal de transition, lesdits pourcentages étant exprimés par rapport au poids total de ladite composition.

L'oxyde d'un métal de transition est de préférence l'oxyde de zirconium.

Selon une forme de réalisation préférée de l'invention, la composition inorganique liquide comprend au moins 2 % environ en poids d'au moins un aluminosilicate, et encore plus préférentiellement de 5 % à 20 % environ en poids d'au moins un aluminosilicate, lesdits pourcentages étant exprimés par rapport au poids total de ladite composition.

Le ou les aluminosilicates sont de préférence choisis parmi les phyllosilicates, tels que par exemple le mica ou le kaolin ; et les tectosilicates, tels que par exemple le feldspath ou la zéolithe.

Selon une forme de réalisation préférée de l'invention, la composition inorganique liquide comprend au moins 10 % environ en poids d'au moins un solvant, et encore plus préférentiellement de 20 % à 75 % environ en poids d'au moins un solvant, lesdits pourcentages étant exprimés par rapport au poids total de ladite composition.

A titre d'exemple préféré, le solvant peut être de l'eau. Lorsque le solvant utilisé dans la composition inorganique liquide est de l'eau, la composition inorganique liquide est une composition aqueuse.

Selon une forme de réalisation préférée de l'invention, la composition inorganique liquide peut comprendre en outre au moins 10 % environ en poids d'au moins un autre silicate différent dudit aluminosilicate, et encore plus préférentiellement de 15 % à 40 % environ en poids d'au moins un autre silicate différent dudit aluminosilicate, lesdits pourcentages étant exprimés par rapport au poids total de ladite composition.

Dans un mode de réalisation particulièrement avantageux, la composition inorganique liquide peut comprendre en outre au moins un plastifiant.

Plus particulièrement, la composition inorganique liquide peut comprendre de 0,01 à 10,0 % en poids de plastifiant, de préférence de 0,01 à 5,0 % en poids de plastifiant, de préférence de 0,1 à 2,0 % en poids de plastifiant, et de façon particulièrement préférée de 0,1 à 1,0 % en poids de plastifiant, lesdits pourcentages étant exprimés par rapport au poids total de ladite composition.

Le plastifiant peut être avantageusement ajouté dans la composition inorganique liquide pour améliorer la tenue au pliage de la couche résistante au feu, ou en d'autres termes limiter de façon significative, voire éviter, les fissures ou craquelures lors de la courbure du câble de l'invention.

Le plastifiant peut être choisi parmi un polyol, un polymère de bas poids moléculaire, le chlorure d'ammonium, un glucide, une argile, et un de leurs mélanges.

A titre d'exemple :
- le polyol peut être le sorbitol ;
- le polymère de bas poids moléculaire peut être un oligomère ayant de 2 à 40, et de préférence de 2 à 20, motifs monomères identiques ou différents, et/ou un polymère ayant un poids moléculaire d'au plus 50 000 g/mol, et de préférence d'au plus 20 000 g/mol, le polymère de bas poids moléculaire étant par exemple un polyéthylène glycol ;
- l'argile peut être un phyllosilicate ;
- le glucide peut être la cellulose.

Selon une forme de réalisation particulièrement préférée de l'invention, ladite composition inorganique liquide est une composition aqueuse comprenant environ de 15 à 45 % en poids d'oxyde de zirconium, environ de 5 % à 20 % en poids d'aluminosilicate, et environ de 15 à 35 % en poids d'un autre silicate différent dudit aluminosilicate, le reste de la composition étant de l'eau. Une telle composition est commercialisée sous la dénomination commerciale Pyropaint ® 634-ZO par la société Aremco (New York, USA) et distribuée par la société Polytec France (Chatillon, France).

La composition inorganique liquide présente de préférence une viscosité allant de 10⁻³ à 2.10⁻³ m²/s environ (1000 à 2000 centistokes environ), et encore plus préférentiellement de 10⁻³ à 1,4.10⁻³ m²/s environ (1000 à 1400 centistokes environ), ladite viscosité étant mesurée à une température de 25°C, à l'aide d'une coupe de viscosité Ford N°4, selon la norme ASTM D1200.

La couche résistante au feu de l'invention peut comprendre au moins un oxyde d'un métal de transition et au moins un aluminosilicate, et optionnellement au moins un autre silicate différent dudit aluminosilicate et/ou au moins un plastifiant, ledit oxyde d'un métal de transition, ledit aluminosilicate, ledit autre silicate et ledit plastifiant étant tels que décrits ci-avant dans la description.

Plus particulièrement, la couche résistante au feu peut comprendre :
- au moins 25 % environ en poids d'au moins un oxyde d'un métal de transition, et de préférence au plus 65 % environ en poids d'au moins un oxyde d'un métal de transition,
- au moins 10 % environ en poids d'au moins un aluminosilicate, et de préférence au plus 25 % environ en poids d'au moins un aluminosilicate,
- optionnellement au moins 25 % environ en poids d'au moins un autre silicate différent dudit aluminosilicate, et de préférence au plus 50 % environ en poids d'au moins un autre silicate différent dudit aluminosilicate, et
- optionnellement au moins 0,01 % environ en poids d'au moins un plastifiant, et de préférence au plus 10 % environ en poids d'au moins un plastifiant,
les pourcentages ci-dessus étant exprimés par rapport au poids total de ladite couche résistante au feu.

L'épaisseur de ladite couche résistante au feu varie de préférence de 20 à 500 µm environ, et encore plus préférentiellement de 100 à 200 µm environ.

L'épaisseur de ladite couche résistante au feu n'a pas d'impact significatif sur le diamètre du câble, ce qui présente un grand avantage en termes de design du câble.

Selon l'invention, l'expression « élément électriquement conducteur allongé » signifie un élément électriquement conducteur présentant un axe longitudinal. En particulier, l'élément électriquement conducteur est allongé car il a notamment subi au moins une étape de tréfilage. Le tréfilage comprend classiquement une étape de déformation à froid, notamment à travers une ou plusieurs filières.

L'élément conducteur allongé est de préférence en cuivre, en aluminium, en un alliage de cuivre, ou en un alliage d'aluminium. Selon une forme de réalisation préférée de l'invention, ledit élément conducteur ne comprend pas de revêtement à base de nickel.

Le câble conforme à la présente invention peut comprendre une pluralité d'éléments électriquement conducteurs allongés. Dans ce cas, chacun des éléments électriquement conducteurs allongés est individuellement entouré par au moins une couche résistante au feu telle définie précédemment, chacune desdites couches étant en contact physique direct avec chacun desdits éléments électriquement conducteurs allongés.

Selon une forme de réalisation particulière et préférée de la présente invention, le câble comprend en outre au moins une couche polymère entourant ladite couche résistante au feu.

Ladite couche polymère est de préférence une couche électriquement isolante.

Selon la présente invention, l'expression « couche électriquement isolante » signifie une couche dont la conductivité électrique peut être d'au plus 1.10⁻⁸ S/m environ (à 25°C en courant continu).

Selon une forme de réalisation particulièrement préférée de l'invention, la couche polymère comprend un matériau polymère choisi parmi les polymères réticulés et non réticulés, les polymères du type inorganique et du type organique.

Le matériau polymère peut en particulier être un homopolymère ou un copolymère ayant des propriétés thermoplastiques et/ou élastomères.

Les polymères du type inorganique peuvent être des polyorganosiloxanes.

Les polymères du type organique peuvent être des polyoléfines, des polyuréthanes, des polyamides, des polyesters, des polyvinyliques ou des polymères halogénés tels que des polymères fluorés (e.g. polytétrafluoroéthylène PTFE) ou des polymères chlorés (e.g. polychlorure de vinyle PVC).

Les polyoléfines peuvent être choisies parmi les polymères d'éthylène et de propylène. A titre d'exemple de polymères d'éthylène, on peut citer les polyéthylènes linéaires basse densité (LLDPE), les polyéthylènes basse densité (LDPE), les polyéthylènes moyenne densité (MDPE), les polyéthylènes haute densité (HDPE), les copolymères d'éthylène et d'acétate de vinyle (EVA), les copolymères d'éthylène et d'acrylate de butyle (EBA), d'acrylate de méthyle (EMA), de 2-hexyléthyl acrylate (2HEA), les copolymères d'éthylène et d'alpha-oléfines tels que par exemple les polyéthylène-octène (PEO), les copolymères d'éthylène et de propylène (EPR), les copolymères d'éthylène/éthyle acrylate (EEA), ou les terpolymères d'éthylène et de propylène (EPT) tels que par exemple les terpolymères d'éthylène propylène diène monomère (EPDM).

Selon la présente invention, l'expression « polyéthylène basse densité » signifie un polyéthylène ayant une densité allant de 0,91 à 0,925 environ.

Selon la présente invention, l'expression « polyéthylène haute densité » signifie un polyéthylène ayant une densité allant de 0,94 à 0,965 environ.

La couche polymère est, de préférence, une couche extrudée par des techniques bien connues de l'homme du métier.

Le câble conforme à la présente invention peut en outre comporter une gaine de protection et/ou un écran métallique. Ladite gaine de protection peut être de préférence la couche la plus externe dudit câble : on peut alors parler de gaine externe de protection. La gaine de protection peut entourer la ou les couches polymères, et l'écran métallique si le câble en comporte un.

La gaine de protection est de préférence réalisée en un matériau exempt d'halogène. Elle peut être réalisée classiquement à partir de matériaux retardant la propagation de la flamme ou résistant à la propagation de la flamme. Notamment, si ces derniers ne contiennent pas d'halogène, on parle de gainage de type HFFR (pour l'anglicisme « *Halogen Free Flame Retardant »).*

Elle comprend au moins un polymère organique ou inorganique.

Le choix du polymère organique ou inorganique n'est pas limitatif et ceux-ci sont bien connus de l'homme du métier.

Selon une forme de réalisation préférée de l'invention, le polymère organique ou inorganique est choisi parmi les polymères réticulés et non réticulés.

Le polymère organique ou inorganique peut être un homo- ou un co-polymère ayant des propriétés thermoplastiques et/ou élastomères.

Les polymères inorganiques peuvent être des polyorganosiloxanes.

Les polymères organiques peuvent être des polyuréthanes ou des polyoléfines identiques à ceux définis ci-dessus pour la couche polymère électriquement isolante.

Le polymère de ladite gaine est de préférence un polymère organique, de préférence encore un polymère d'éthylène, et de préférence encore un copolymère d'éthylène et d'acétate de vinyle, un polyéthylène linéaire basse densité ou un de leurs mélanges.

La gaine de protection peut comprendre en outre une charge minérale ignifugeante hydratée. Cette charge minérale ignifugeante hydratée agit principalement par voie physique en se décomposant de manière endothermique (e.g. libération d'eau), ce qui a pour conséquence d'abaisser la température de la gaine et de limiter la propagation des flammes le long du câble. On parle notamment de propriétés de retard à la flamme, bien connues sous l'anglicisme « *flame retardant* ».

La charge minérale ignifugeante hydratée peut être un hydroxyde métallique tel que l'hydroxyde de magnésium ou le trihydroxyde d'aluminium.

La gaine de protection peut comprendre en outre une charge inerte, notamment choisi parmi le talc, les micas, les argiles déshydratées et un de leurs mélanges.

Dans un mode de réalisation particulier, le câble selon la présente invention peut comprendre :
- plusieurs éléments électriquement conducteurs allongés, chacun desdits éléments électriquement conducteurs allongés étant entouré par une ou plusieurs couches résistantes au feu conforme à l'invention,
- une couche électriquement isolante, telle que notamment décrite ci-avant, entourant chaque élément électriquement conducteur allongé ensemble avec la ou les couches résistantes au feu, et
- une gaine de protection, telle que notamment décrite ci-avant, entourant l'ensemble des éléments constitutifs du câble.

La présente invention a également pour objet un procédé de préparation du câble tel que défini précédemment, c'est-à-dire d'un câble comprenant au moins un élément électriquement conducteur allongé et au moins une couche résistante au feu entourant ledit élément électriquement conducteur allongé, ladite couche résistante au feu étant en contact physique direct avec ledit élément électriquement conducteur allongé, ledit procédé étant caractérisé en ce qu'il comprend au moins :
i) une étape d'application d'une composition inorganique liquide directement sur la surface d'au moins un élément électriquement conducteur allongé dudit câble,
ii) une étape de traitement thermique de ladite composition inorganique liquide pour former ladite couche résistante au feu.

Selon une forme de réalisation particulière du procédé conforme à la présente invention, les étapes i) et ii) peuvent être réitérées plusieurs fois, typiquement 2 ou 3 fois. Il est ainsi possible de faire varier l'épaisseur de la couche résistante au feu.

L'étape i) d'application de la composition inorganique liquide sur la surface de l'élément électriquement conducteur allongé peut par exemple être réalisée par immersion dudit élément dans ladite composition.

L'étape ii) de traitement thermique est de préférence une étape de solidification de la composition inorganique liquide. Ledit traitement thermique entraîne l'évaporation du solvant de la composition inorganique liquide, et ainsi la solidification de la composition inorganique.

Comme indiqué précédemment, le traitement thermique est de préférence réalisé à une température d'au plus 300°C environ, de préférence à une température comprise dans une gamme allant de 95°C à 300°C environ, et de façon particulièrement préférée à une température comprise dans une gamme allant de 200°C à 300°C environ.

Le traitement thermique peut être réalisé en utilisant des systèmes de chauffe bien connu de l'homme du métier tels que par exemple un système de chauffage par ultra-violet, par micro-onde, par infra-rouge, ou par radiant céramique..

Avant l'étape i), le ou les éléments électriquement conducteurs allongés peuvent être soumis à un ou plusieurs traitement(s) de surface.
Le traitement de surface peut être notamment choisi parmi une oxydation de surface, un dégraissage, un décapage, et une de leur combinaison. L'oxydation de surface peut permettre de produire un rayon de courbure approprié des éléments électriquement conducteurs allongés. L'oxydation de surface peut être effectuée par traitement acide du ou des éléments électriquement conducteurs allongés, notamment en présence d'un courant électrique. Le dégraissage peut permettre d'enlever l'émulsion de tréfilage sur le ou les éléments électriquement conducteurs allongés. Le dégraissage peut être effectuée par une solution aqueuse contenant une base, telle que par exemple de la soude. Le décapage peut permettre de désoxyder la surface du ou des éléments électriquement conducteurs allongés. Le décapage peut être effectué par une solution aqueuse contenant un acide, tel que par exemple de l'acide sulfurique.

### Brève description des dessins

Les dessins annexés illustrent l'invention :

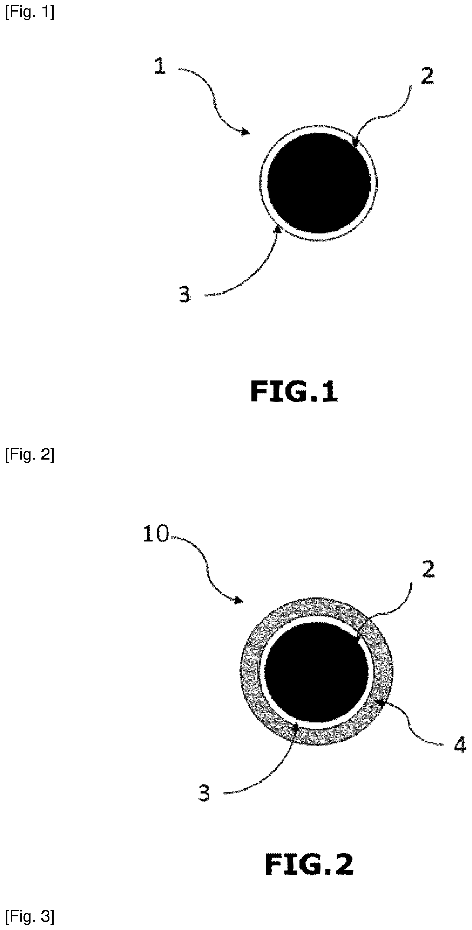

[Fig. 1] représente de manière schématique une structure, en coupe transversale, d'un câble conforme à l'invention selon un premier mode de réalisation.
   La figure 1 montre un câble (1) conforme à l'invention comprenant un élément électriquement conducteur allongé (2) et une couche résistante au feu (3) entourant ledit élément électriquement conducteur allongé (2), et étant en contact physique direct avec l'élément électriquement conducteur allongé (2). L'élément électriquement conducteur allongé (2) est notamment un fil de cuivre.
[Fig. 2] représente de manière schématique une structure, en coupe transversale, d'un câble conforme à l'invention selon un deuxième mode de réalisation.
   La figure 2 montre un câble (10) conforme à l'invention comprenant l'élément électriquement conducteur allongé (2) et la couche résistante au feu (3) tels que décrits à la figure 1, ainsi qu'une couche électriquement isolante (4) entourant la couche résistante au feu (3). La couche électriquement isolante (4) peut être par exemple une couche d'un matériau polymère à base de polyéthylène, formée notamment par extrusion.

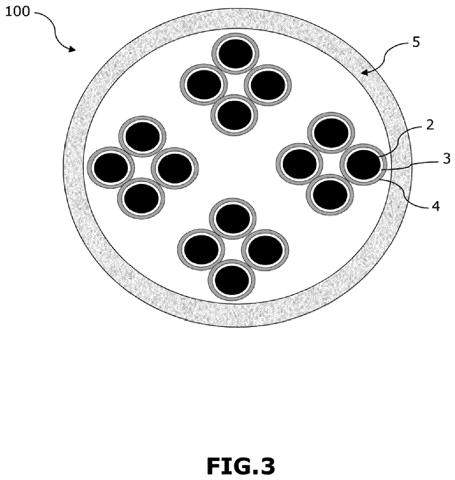

[Fig. 3] représente de manière schématique une structure, en coupe transversale, d'un câble conforme à l'invention selon un troisième mode de réalisation.

La figure 3 montre un câble (100) conforme à l'invention comprenant plusieurs éléments électriquement conducteurs allongés (2), chaque élément électriquement conducteur allongé (2) étant entouré successivement par la couche résistante au feu (3) et la couche électriquement isolante (4), chaque élément électriquement conducteur allongé, couche résistante au feu et couche électriquement isolante étant tels que décrits dans la figure 2. Le câble (100) comprend en outre une gaine de protection (5) entourant l'ensemble des éléments constitutifs du câble. La gaine de protection (5) peut être par exemple une couche polymère de type HFFR, formée notamment par extrusion. La gaine de protection peut en outre entourer un écran métallique (non représenté), ledit écran métallique entourant l'ensemble des éléments constitutifs du câble. L'écran métallique peut être par exemple un ou plusieurs rubans métalliques, notamment en acier galvanisé.

D'autres caractéristiques et avantages de la présente invention apparaîtront à la lumière des exemples qui vont suivre en référence aux figures annotées, lesdits exemples et figures étant donnés à titre illustratif et nullement limitatif.

### EXEMPLES

### Exemple 1 : Préparation d'un câble conforme à l'invention comportant une couche résistante au feu de 150 um d'épaisseur

Un fil de cuivre d'un diamètre de 1,2 mm a été trempé dans une solution aqueuse d'une viscosité d'environ 1,2.10⁻³ m²/s (1200 centistokes) (mesurée à une température de 25 °C, à l'aide d'une coupe de viscosité Ford N°4, selon la norme ASTM D1200), commercialisée par la société Aremco sous la référence Pyropaint ® 634-ZO, puis soumis à un traitement thermique à une température de 250°C pendant une durée de 30 secondes, à l'aide d'un système de chauffage par radiant céramique.

Après le traitement thermique, on a obtenu un câble recouvert par une couche blanche résistante au feu d'une épaisseur de 50 µm.

Les étapes de trempage du fil de cuivre dans la solution Pyropaint ® 634-ZO et de traitement thermique ont ensuite été réitérées deux fois dans les mêmes conditions.

On a obtenu un câble recouvert par une couche blanche résistante au feu d'une épaisseur de 150 µm.

### Exemple 2 : Test de résistance à haute température

Le câble obtenu ci-dessus à l'exemple 1 a été introduit dans un four vertical chauffé à 830°C pendant 30 minutes afin de tester la résistance de couche appliquée sur le fil de cuivre à une exposition à très haute température.

Après ce test, on a observé que la couche résistante au feu n'avait subi aucune dégradation (aucune craquelure) et qu'elle permet donc de protéger efficacement le fil de cuivre des effets négatifs d'une exposition à très haute température.

## Revendications

1. Câble (1, 10, 100) comprenant au moins un élément électriquement conducteur allongé (2) et au moins une couche résistante au feu (3) entourant ledit élément électriquement conducteur allongé (2), ledit câble étant **caractérisé en ce que** ladite couche résistante au feu est en contact physique direct avec ledit élément électriquement conducteur allongé, et **en ce que** ladite couche résistante au feu est obtenue par traitement thermique d'une composition inorganique liquide.

2. Câble selon la revendication 1, caractérisé en ce la couche résistante au feu est obtenue par solidification de la composition inorganique liquide.

3. Câble selon la revendication 1 ou 2, **caractérisé en ce que** le traitement thermique est réalisé à une température d'au plus 300°C.

4. Câble selon l'une quelconque des revendications précédentes, **caractérisé en ce que** la composition inorganique liquide comprend au moins un oxyde d'un métal de transition, au moins un aluminosilicate, et au moins un solvant.

5. Câble selon la revendication 4, **caractérisé en ce que** la composition inorganique liquide comprend au moins 10 % en poids d'au moins un oxyde d'un métal de transition par rapport au poids total de ladite composition.

6. Câble selon la revendication 4 ou 5, **caractérisé en ce que** l'oxyde d'un métal de transition est l'oxyde de zirconium.

7. Câble selon l'une quelconque des revendications 4 à 6, **caractérisé en ce que** la composition inorganique liquide comprend au moins 2 % en poids d'au moins un aluminosilicate par rapport au poids total de ladite composition.

8. Câble selon l'une quelconque des revendications 4 à 7, **caractérisé en ce que** la composition inorganique liquide comprend au moins 10 % en poids d'au moins un solvant par rapport au poids total de ladite composition.

9. Câble selon la revendication 8, **caractérisé en ce que** le solvant est de l'eau.

10. Câble selon l'une quelconque des revendications 4 à 9, **caractérisé en ce que** la composition inorganique liquide comprend en outre au moins un autre silicate différent dudit aluminosilicate.

11. Câble selon l'une quelconque des revendications 4 à 10, **caractérisé en ce que** la composition inorganique liquide comprend en outre au moins un plastifiant.

12. Câble selon l'une quelconque des revendications précédentes, **caractérisé en ce que** la composition inorganique liquide présente une viscosité allant de 10⁻³ à 2.10⁻³ m²/s (1000 à 2000 centistokes), ladite viscosité étant mesurée à une température de 25 °C, à l'aide d'une coupe de viscosité Ford N°4, selon la norme ASTM D1200.

13. Câble selon l'une quelconque des revendications précédentes, **caractérisé en ce que** la couche résistante au feu comprend au moins un oxyde d'un métal de transition et au moins un aluminosilicate.

14. Câble selon l'une quelconque des revendications précédentes, **caractérisé en ce que** l'épaisseur de ladite couche résistante au feu varie de 20 à 500 µm.

15. Câble selon l'une quelconque des revendications précédentes, **caractérisé en ce que** l'élément conducteur allongé est en cuivre, en aluminium, en un alliage de cuivre, ou en un alliage d'aluminium.

16. Câble selon l'une quelconque des revendications précédentes, **caractérisé en ce qu'**il comprend une pluralité d'éléments électriquement conducteurs allongés, chacun des éléments électriquement conducteurs allongés étant individuellement entouré par au moins une couche résistante au feu, et **en ce que** chacune desdites couches résistantes au feu est en contact physique direct avec chacun desdits éléments électriquement conducteurs allongés.

17. Câble selon l'une quelconque des revendications précédentes, **caractérisé en ce qu'**il comprend en outre au moins une couche polymère (4) entourant ladite couche résistante au feu.

18. Procédé de préparation d'un câble tel que défini à l'une quelconque des revendications 1 à 17, **caractérisé en ce qu'**il comprend au moins :
i) une étape d'application d'une composition inorganique liquide sur la surface d'au moins un élément électriquement conducteur allongé dudit câble, et
ii) une étape de traitement thermique de ladite composition inorganique liquide pour former ladite couche résistante au feu.

19. Procédé selon la revendication 18, **caractérisé en ce que** les étapes i) et ii) sont réitérées plusieurs fois.
